# EUROPEAN PATENT APPLICATION

(11) **EP 4 390 194 A1**
(43) Date of publication of application: **26.06.2024**
(21) Application number: 22216287.7
(22) Date of filing: 23.12.2022
(51) Int. Cl.: F16K 27/00, F16K 31/00, F16K 11/22, F15B 13/08, F16L 37/098, B60N 2/90

(54) **VEHICLE SEAT CUSHION INFLATION SYSTEM**

(71) Applicant: FICO CABLES LDA, 4470-263 Vermoim-Maia (PT)
(72) Inventor: DE CASTRO FARIA, Manuel Antonio, 4470-263 Vermoim-Maia (PT); RODRIGUES ARCOVERDE, Gabriel Augusto, 4470-263 Vermoim-Maia (PT)
(74) Representative: Bardehle Pagenberg Partnerschaft mbB Patentanwälte Rechtsanwälte

(57) **Abstract**

Vehicle seat cushion inflation system 1 for selectively inflating a set of pneumatic seat cushions 104 within a vehicle seat 100, comprising a printed circuit board 20; at least one set of electrically controlled pneumatic piezoelectric valves 30, 30a, 30b, 30c, connected to the printed circuit board 20, wherein each valve 30 has an inlet port 32, an outlet port 34 and a first seat cushion port 36 connectable to at least one of the seat cushions 104; wherein the inlet port 32 and outlet port 34 of each individual valve 30, 30a, 30b, 30c are in direct pneumatic connection with each other; and the inlet port 32 of one valve 30 and the outlet port 34 of another valve 30 are directly connected to each other to provide a direct pneumatic connection between the two vales 30. Further a method for assembling a vehicle seat cushion inflation system 1 is claimed.

## Description

### 1. Technical field

The invention relates to a vehicle seat cushion inflation system particularly for providing compressed air to a set of pneumatic seat cushions of an automotive comfort system within an automotive seat. Such comfort systems are used for shaping the seat cushion or backrest of an automotive seat according to passengers needs or for providing a massage function.

### 2. Prior art

Automotive comfort systems with air bladders for shaping the seat cushion or the backrest of an automotive seat are known. Presently such comfort systems comprise motor actuated air pumps that supply compressed air to fill air bladders with the desired amount of air. Further, the filling and release of air of such air bladders is usually controlled by solenoid air valves.

If more than one air bladder is used usually the compressed air from one common pump is distributed to a set of solenoid air valves and/or piezoelectric (PZT) valves that control the air flow to a corresponding set of air bladders. The air distribution is usually done by a manifold that is individually provided for the respective system or made by standard tubing and tubing connectors.

The prior art document US 10 711 911 B1 discloses a pressure distributor for a motor vehicle, in particular for pneumatic actuators in seats. The pressure distributor distributes compressed air between a pressure generator and a plurality of electrically controllable valves via a common air inlet line. The common air inlet line is connected as a separate component via a releasable connection to the plurality of valves.

However, the manifolds used in the prior art have several drawbacks. For instance, they need to be provided as a separate element, which is cumbersome and not cost-effective. Furthermore, the manifolds increase the surface area between a pump and the bladder, which increases frictional losses. Thus, there is a need to further improve automotive comfort systems comprising air bladders.

### 3. Summary of the invention

The above-mentioned problem is solved by a vehicle seat cushion inflation system according to claim 1 and by a method for assembling a seat cushion inflation system for vehicles according to claim 15.

Particularly, the above-mentioned problem is solved by a vehicle seat cushion inflation system for selectively inflating a set of pneumatic seat cushions within a vehicle seat, comprising a printed circuit board; at least one set of electrically controlled pneumatic piezoelectric valves, connected to the printed circuit board, wherein each valve has an inlet port, an outlet port and a first seat cushion port connectable to at least one of the seat cushions; wherein the inlet port and outlet port of each individual valve are in direct pneumatic connection with each other; and the inlet port of one valve and the outlet port of another valve are directly connected to each other to provide a direct pneumatic connection between the two valves.

The vehicle seat cushion inflation system integrates the air distribution components of a pneumatic seat cushion vehicle seat in one integral part. The set of electrically controlled pneumatic piezoelectric valves is preferably electrically connected to a printed circuit board (PCB) that provides control signals to each valve of the set (optionally to the set and any further set) of pneumatic valves and preferably also mechanically mounts the set of pneumatic valves. At least one, preferably only one valve of the set of valves is provided with compressed air from a respective source of compressed air, like an electrical air pump. The other valves of the set of valves are provided with compressed air from the previous valve, respectively. Thus, a daisy-chain of electrically controlled pneumatic piezoelectric valves is provided, that distributes the compressed air between all directly connected valves. By way of the seat cushion ports, the compressed air is provided from a valve to the respective seat cushion to be pneumatically controlled. By electrically controlling the piezoelectric valves, a piezoelectric actuator, i.e. a piezoelectric membrane, within the valve moves and selectively controls an airflow through the seat cushion port.

The valves comprise an inlet port and an outlet port, which are directly connectable to corresponding outlet and inlet ports of other valves. Thus, the inlet and outlet ports provide an easy direct pneumatic connection of two valves with each other. The inlet port and outlet port of each valve are in direct pneumatic connection with each other to guide the compressed air through each of the valves. The direct pneumatic connection between the inlet port and the outlet port of each valve is always present and cannot be closed. Thus, air entering the inlet port of the valve is always directed to the outlet port of the valve and vice versa. Thus, the valves can be pneumatically connected to each other for a common air supply of the connected valves. The inlet port serves for receiving compressed air from a previous valve and the outlet port provides the compressed air to the subsequent valve. Thus, the valves comprise an internal air supply for all valves. External air manifolds for an air supply to the valves are not necessary anymore. This reduces parts, assembly effort and the corresponding costs.

An arbitrary number of valves can thereby be pneumatically connected to each other one after the other. Thus, the vehicle seat cushion inflation system is modular and allows support to a different number of air cushions by providing a respective number of valves. One valve can be pneumatically connected to a further valve of the same type, shape and/or to a further valve having the same corresponding inlet and/or outlet ports. As described herein, the types of the valves may be different (different in the number of states of the valve and/or number of ports, which may be individually controllable) whilst still ensuring a modular direct connection between the valves. This provides easy scalability of the system and decreases overall production costs. It is appreciated that in essentially all types of valves used herein, a pneumatic connection between an inlet port and an outlet port of one valve may be ensured, such that compressed air can be guided through one valve in order to facilitate that compressed air is provided to a further valve.

"Directly connectable" as used herein may be understood such that the inlet port of one valve and the outlet port of another valve are connectable substantially without a tube, adapter and/or an extension part in-between. Thereby, it is understood that the inlet port of one valve and the outlet port of another valve may directly contact each other. This reduces the part counts necessary for providing a connection. Of course, since an air-tight connection between the outlet port of one valve and the inlet port of the other valve is necessary a seal may be provided in the connection. This, is also considered as "directly connectable".

It is appreciated that manifolds, which are conventionally used in order to provide and distribute compressed air are therefore not required. Thereby, the associated manufacturing costs and assembly efforts is saved. Additionally, frictional losses of the flowing air can be alleviated, which reduces power consumption during operation of the vehicle seat cushion inflation system. Further, a pneumatic pump or other source of compressed air can be connected to the inlet ports or the outlet ports of the valves and sets of valves can be interconnected via their inlet and/or outlet ports. Thus, a series (e.g. one or more rows) of valves can be provided with compressed air from one single source.

In one example, the inlet ports and outlet ports may be understood as protruding from opposing sides of a respective valve, preferably protruding substantially perpendicular to the respective sides of the respective valve. They provide a hollow cavity to guide the compressed air from the inlet port to the outlet port and in an electrically controlled manner from the inlet port to the seat cushion port(s).

It is particularly appreciated that the valves have substantially the same shape, thus, they can be manufactured in larger quantities, which makes the manufacturing and procurement more cost-effective. In addition, if a valve is damaged (e.g. by way of mechanical impacts, which could occur in particular in the automotive sector), said valve can be easily replaced by a respective spare valve. This makes the vehicle seat cushion inflation system's operation more efficient by providing a way to address mechanical failures in a cost-effective manner. Furthermore, if the fault of a valve is due to the control of the valve for the respective bladder, the other valves could work properly without problems, since due to the direct connection between inlet port and outlet port of the same valve the other valves are supplied with air even from a faulty valve.

Preferably, the inlet port is of a male type and the outlet port is of a corresponding female type; or the inlet port is of a female type and the outlet port is of a corresponding male type. This facilitates a pneumatic connection of two or more valves, preferably in a row (or in series). It is appreciated that the ports that are pneumatically connected to one another are designed to be easily received into one another. This eases connection as the assembly worker deals with one type of pneumatic connection, which avoids compatibility issues. Further, merely ports that are supposed to be connected to one another can be easily connected to one another. This further simplifies the assembly.

Preferably, the outlet port of a valve comprises at least one latching means for latching with the inlet port of a further valve or with an outlet adapter; or the inlet port of a valve comprises at least one latching means for latching with the outlet port of a further valve. The latching means secures the pneumatic connection of the connected parts (ports of valves, adapters). The latching means may comprise a structural protrusion. This simplifies the connection which is done preferably done by manual latching without the need for any tools.

Preferably, the inlet port of a valve, the outlet port of a valve, an outlet adapter and/or a closing cap comprise a notch at the perimeter for latching with a latching means of a port and/or of an inlet adapter, wherein the notch has a tapered section that interrupts the notch for disengaging with the latching means by rotation, preferably by rotation around about 85° to 95°, most preferably 90°. This enables connecting two elements with each other by pushing directly and disengaging two connected elements by rotation. Thereby, the preferably two tapered sections push the latching means out of engagement with the notch and the pneumatic connection between the two connected parts can be easily disengaged, preferably without the need for any tools. Preferably, the closing cap comprises a socket, for rotating the closing cap by a socket screw key, for example, a hexagon socket for a hexagon socket screw key (e.g. Allan or Inbus key).

Preferably, the at least one set of electrically controlled pneumatic piezoelectric valves comprises 3 or more, preferably 4, 5, 6, 7 or 8 valves. A second set and/or any further set of electrically controlled pneumatic piezoelectric valves may comprise the same or a different number of valves. Further sets may also comprise the same or a different number of valves.

Preferably, the valves are pneumatically connected in series (such as one by one) and arranged in a row. The row may also be understood as a substantially straight line, forming a main axis, substantially parallel to an air flow direction of compressed air that is guided from the inlet port to an outlet port of a first valve and then to an inlet port of a neighboring valve of said row. The arrangement of a row eases assembling as the location of the valves may be prescribed by way of their pneumatic connection to one another.

Preferably, the inlet ports and the outlet ports are arranged parallel, preferably coaxially. This reduces complexity of the compressed air flow as less corners have to be passed, which could increase frictional losses. This reduces power consumption during operation of the vehicle seat cushion inflation system.

Preferably, the first seat cushion port is arranged essentially perpendicular to the inlet port and/or the outlet port, preferably, the first seat cushion port, the inlet port and the outlet port are arranged essentially on a same plane. This plane can, for instance, be parallel to the air flow direction as described herein.

Preferably, the valves comprise integrally injection molded attachment means for connection of the valves to the printed circuit board, preferably, the attachment means has pins, which extend through mounting holes within the printed circuit board. By way of the attachment means, the valves can be easily mechanically attached directly to the PCB which increases mechanical stability. The pins can be thermally welded, once inserted into the mounting holes, from the backside of the PCB to fix the valves. Thus, no additional mounting means are needed.

Preferably, the vehicle seat cushion inflation system further comprises at least one closing cap for pneumatically closing a non-connected inlet port and/or a non-connected outlet port. Thus, a set of valves with a flexible number of valves can be provided, wherein the respective last valve may be provided with the closing cap. The closing cap has a similar connection part (e.g. male type) as an inlet port or an outlet port of a valve and can thus be easily pneumatically connected to a non-connected port. As used herein, the term "non-connected" may also be understood as "not-used".

Preferably, a valve comprises an integrally formed wall for pneumatically closing a non-connected inlet port or a non-connected outlet port. This promotes to ensure a pneumatic sealing. In this manner, no closing cap would be required to block the air of the valve.

Preferably, the vehicle seat cushion inflation system further comprises O-rings, for sealing the pneumatic connection(s) between valves and/or a pneumatic connection between a port and a closing cap and/or a connection between a port and an adapter. The O-rings provide an air-tight seal of the respective connection parts (e.g. an outlet port and an inlet port). The O-rings are preferably placed within the female connectors of the inlet port, outlet port or inlet adaptor and are axially compressed when latching the respective connection parts together by latching means.

Preferably, at least one of the valves further has at least one exhaust port herein the exhaust port is arranged perpendicular to the inlet port, the outlet port and the first seat cushion port. Depending on the state of the valve (e.g. the actuation), the exhaust port(s) is/are open, such that compressed air can be released from the cushion seat via the seat cushion port to the environment. Thereby, the exhaust port facilitates deflation of a seat cushion that has been provided with compressed air by way of the seat cushion port. As described elsewhere in greater detail, some types of valves do not comprise an exhaust port (e.g. a 2/2 valve). In such a case, it may be possible that a seat cushion has an exhaust port. Some types of valves have for instance two exhaust ports (e.g. a 3/2 double valve), wherein both exhaust ports may be individually controllable by way of piezo elements.

Preferably, at least one of the valves is configured as a double valve and further comprises an individually electrically controllable second seat cushion port connectable to a seat cushion. It is appreciated that by this arrangement, one valve has two independent seat cushion ports to provide compressed air to one seat cushion. For instance, such a type of valve may be a 3/2 double valve (e.g. with two exhaust ports), wherein both exhaust ports may be individually controllable by way of piezo elements.

Different combinations of numbers of valves in one or more sets of valves having one or two seat cushion ports are certainly encompassed by the present disclosure.

Preferably, one or more of the valves are configured to selectively and electrically controlled guide air from the inlet port to the seat cushion port; to guide air from the seat cushion port to an exhaust port; and/or to maintain air inside the valve. The respective guidance of air may depend on the actuation of the valve and or the type of the valve (e.g. 3/3-way valve, 3/2-way double valve, 3/2-way valve, 2/2-way valve), as described elsewhere herein in greater detail. Additionally, the valves are configured to always guide air from the inlet port to the outlet port.

Preferably, the valves further comprise at least one piezo electric valve membrane. The membrane may be deformed by way of electrical current. As an example, an applied electrical field may result in a mechanical strain of the membrane. Further, the membrane may be deformed reversibly, e.g. the membrane may exhibit the piezoelectric effect in one and in another direction, depending on the applied electrical field. Depending on the direction of bending of the membrane, a port, such as a seat cushion port, an exhaust port or the like of the valve can be closed or opened. Thereby one or more states of the valve can be defined.

In one embodiment, the vehicle seat cushion inflation system comprises a housing, wherein the printed circuit board is arranged within the housing. The housing protects the system and preferably serves for mounting the system within the vehicle seat. In one example, the pump may be provided within the housing and/or attached to the housing. Preferably, the pump is at least electrically connected to the same printed circuit board as the set of valves. Further, the pump can preferably be also mechanically connected to the same printed circuit board as the set of valves. Optionally, by way of the attachment means of the valves, the valves can be easily mechanically attached directly to the housing which increases mechanical stability.

The above-mentioned object is also solved by a method for assembling a vehicle seat cushion inflation system, the method comprising at least the following steps in the following order:
a. attaching, electrically controlled pneumatic piezoelectric valves of a set of electrically controlled pneumatic piezoelectric valves directly in series to provide a valves subassembly; and
b. attaching, the valves subassembly to a printed circuit board, to provide a valves and printed circuit board subassembly.

The attaching (step a.) is done directly, e.g. by an inlet port of one valve and an outlet port of another valve, to allow a direct pneumatic connection between two vales of the subassembly without any interconnected elements.

The valves subassembly can be mechanically and/or electrically attached to the printed circuit board.

Optionally, the method comprises attaching, preferably mechanically, the valves and printed circuit board subassembly to a housing. Thus, the valves and the printed board subassembly will be mechanically connected to the housing.

This method allows a fast, easy, and secure assembly of the seat cushion inflation system. It is to be noted that the above-mentioned features and advantages that are described with reference to the vehicle seat cushion inflation system also apply to the method for assembling a vehicle seat cushion inflation system. Preferably, the system that is assembled according to this method is the system described herein.

Preferably, also an air pump can be mechanically and/or electrically be attached to the printed circuit board and can become part of the subassembly.

In one embodiment, the vehicle seat cushion inflation system as described herein, wherein the at least one set of electrically controlled pneumatic piezoelectric valves is a first set of electrically controlled pneumatic piezoelectric valves and the system further comprises a second set of electrically controlled pneumatic piezoelectric valves, wherein, in each set of electrically controlled pneumatic piezoelectric valves, the valves are directly and pneumatically connected in series and, preferably, arranged in a row, wherein
the system comprises a tube or a plastic part and the first and the second set are pneumatically connected via the tube or the plastic part, wherein one of the sets is provided with an inlet adapter connectable to a pump and the remaining set comprises a closing cap;
the system comprises one plastic part, or two pneumatically connected plastic parts, wherein the one or two plastic parts have in total at least three openings that are pneumatically connected to the two sets of valves and to a pump, respectively, wherein each set of valves comprises a closing cap; or
the system comprises two tubes and a connection element having three openings, wherein the two tubes are pneumatically connected to two openings of the connection element and the remaining opening is connected to a pump, wherein the two tubes are further pneumatically connected to the two sets of valves, respectively, wherein each set comprises a closing cap.

Therefore, the last valve of the row comprises the inlet port or the outlet port closed by a cap or alternatively by a wall that closes the inlet port or outlet port.

Preferably, if two set of valves in parallel rows are provided for a better packaging, the cushion ports of each set are directed in opposite directions. In such a configuration, preferably, the contacting pins facing the respective contacting pins of the other set of valves.

Preferably, when connecting two set of valves in parallel to a pump, the adapter to each set of valves is of a different type, one as a female type and the other as male type.

Preferably, the plastic part is a single-piece injection molded plastic part. This plastic part can be efficiently produced. The tube may have the advantage that mechanical impacts are dampened, which can increase the lifetime of the tube and/or the valves to which the tube is connected.

### 4. Short description of the drawings

In the following, preferred embodiments of the invention are disclosed by reference to the accompanying figures, in which shows:
- Fig. 1:: a schematic sectional view of a vehicle seat with pneumatic seat cushions and a vehicle seat cushion inflation system;
- Fig. 2:: a pneumatic schematics of a vehicle seat cushion inflation system together with pneumatic seat cushions and an air pump;
- Fig. 3:: a three-dimensional view of a preferred embodiment of a vehicle seat cushion inflation system with two sets of valves connected via a tube;
- Fig. 3A:: a three-dimensional partial view of Fig. 3 seen from another point;
- Fig. 4:: a three-dimensional view of a further preferred embodiment of a vehicle seat cushion inflation system with one set of valves;
- Fig. 4A:: a three-dimensional view of Fig. 4 seen from the other side;
- Fig. 5:: a partial sectional view of a vehicle seat cushion inflation system with at least two connected valves and an adapter;
- Fig. 6:: a three-dimensional view of an embodiment of a valve;
- Fig. 6A:: a three-dimensional view of the valve of Fig. 6 seen from another side;
- Fig. 6B:: a three-dimensional view of the valve of Figs. 6A and 6B seen from yet another side;
- Figs. 7 and 7A:: a partial sectional view and a three-dimensional detail view of a vehicle seat cushion inflation system during assembly of an inlet adapter;
- Figs. 8 and 8A:: a partial sectional view and a three-dimensional detail view of a vehicle seat cushion inflation system during assembly of two valves;
- Figs. 9 and 9A:: a partial sectional view and a three-dimensional detail view of a vehicle seat cushion inflation system during assembly of a closing cap;
- Fig. 10:: a three-dimensional view of a further preferred embodiment of a vehicle seat cushion inflation system with one set of valves of further types;
- Fig. 11:: a three-dimensional view of a further preferred embodiment of a vehicle seat cushion inflation system with one set of valves of several types; and
- Figs. 12 to 12C:: valves of four types in greater detail according to preferred embodiments of a vehicle seat cushion inflation system.

### 5. Description of preferred embodiments

In the following preferred embodiments of the invention are described with respect to the figures. It is noted that further embodiments are certainly possible, and the below explanations are provided by way of example only, without limitation. Further, the present invention can also be used in other embodiments not explicitly disclosed hereafter. Moreover, as detailed below, the embodiments are compatible with each other, and individual features of one embodiment may also be applied to another embodiment.

Throughout the present figures and specification, the same reference numerals refer to the same elements. The figures may not be to scale, and the relative size, proportions, and depiction of elements in the figures may be exaggerated for clarity, illustration, and convenience.

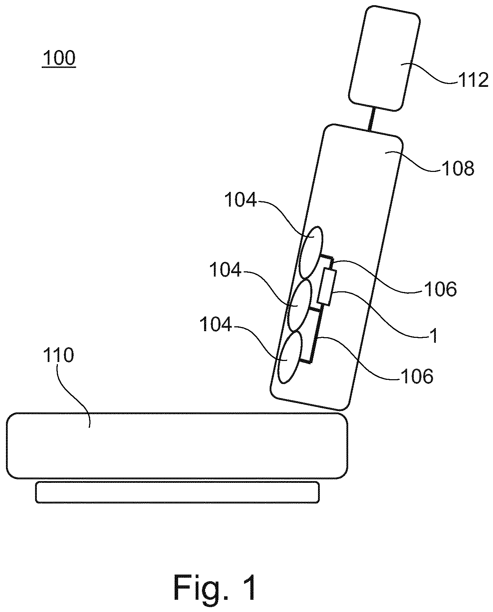

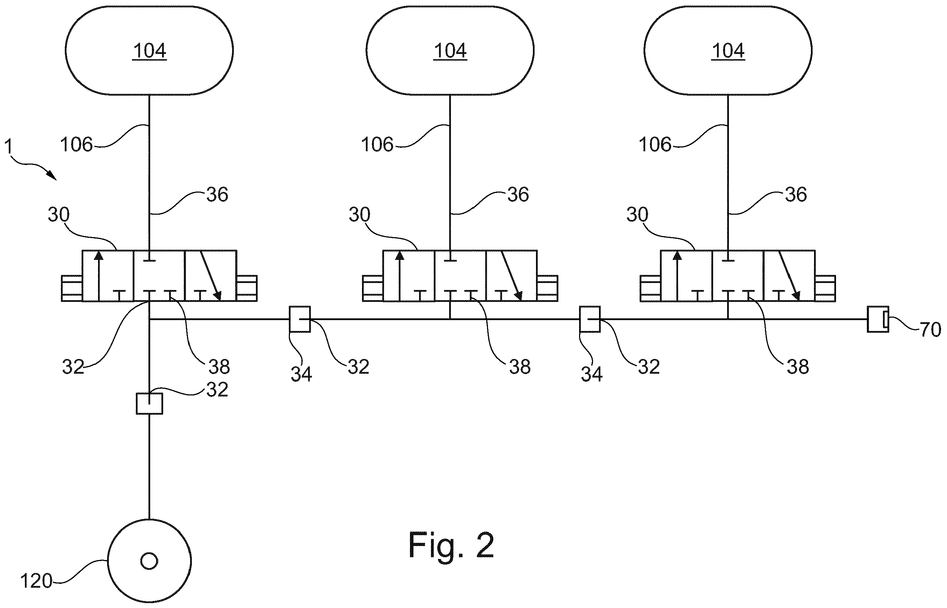

Fig. 1 shows schematically a vehicle seat 100 with pneumatic seat cushions 104 and a vehicle seat cushion inflation system 1 integrated into the backrest 108 of the seat 100. By means of the pneumatic seat cushions 104 the passenger can adapt the shape or contour of the backrest 108 according to the personal comfort. Thereby, the pneumatic seat cushions 104, which are air bladders, are selectively inflated with compressed air from an electric air pump 120 (see Fig. 2). In some embodiments also massage functions or the like can be realized by the vehicle seat cushion inflation system 1 with pneumatic seat cushions 104. Further, pneumatic air cushions 104 can also be integrated into the seat portion 110 or the headrest 112 of the seat.

The vehicle seat cushion inflation system 1 controls and distributes the compressed air selectively from the air pump 120 to the pneumatic seat cushions 104 during inflation, selectively maintains the air within the pneumatic seat cushions 104, and also selectively controls release of air from the pneumatic seat cushions 104 during deflation.

Fig. 2 shows a pneumatics diagram of a vehicle seat cushion inflation system 1 with three pneumatic seat cushions 104 and a common electric air pump 120. The number of pneumatic seat cushions 104 and corresponding electrically controlled pneumatic piezoelectric valves 30 is only exemplary and can vary according to the needs of the customer and seat manufacturer.

The vehicle seat cushion inflation system 1 has the following functionality: The air pump 120 takes in air from the ambient, compresses it to some extent and provides this compressed air to the pneumatic valves 30 via merely one pneumatic valve 30 (indicated in Fig. 2 by the left valve 30). One or more selected ones of the pneumatic valves 30 open electrically to provide the compressed air to a respective pneumatic seat cushion 104 via a respective air conduit 106 between the pneumatic valve 30 and the corresponding pneumatic seat cushion 104. If the respective pneumatic valve 30 closes, the air pressure is maintained within the respective pneumatic seat cushions 104. Further, the vehicle seat cushion inflation system 1 is able to release the air in a controlled manner from the pneumatic seat cushions 104 to the ambient by opening a selected one of the pneumatic valves 30.

The vehicle seat cushion inflation system 1 in this embodiment comprises three electrically controlled 3/3-way pneumatic valves 30. Each valve 30 having an inlet port 32, an outlet port 34, a first seat cushion port 36 and a first exhaust port 38. The outlet port 34 of the first valve 30 (left one in Fig. 2) is pneumatically connected to the inlet port 32 of the second valve 30 (middle one in Fig. 2), the outlet port 34 of the second valve 30 is pneumatically connected to the inlet port 32 of the third valve 30 (right one in Fig. 2) and the outlet port 34 of the third valve 30 is closed by a closing cap 70.

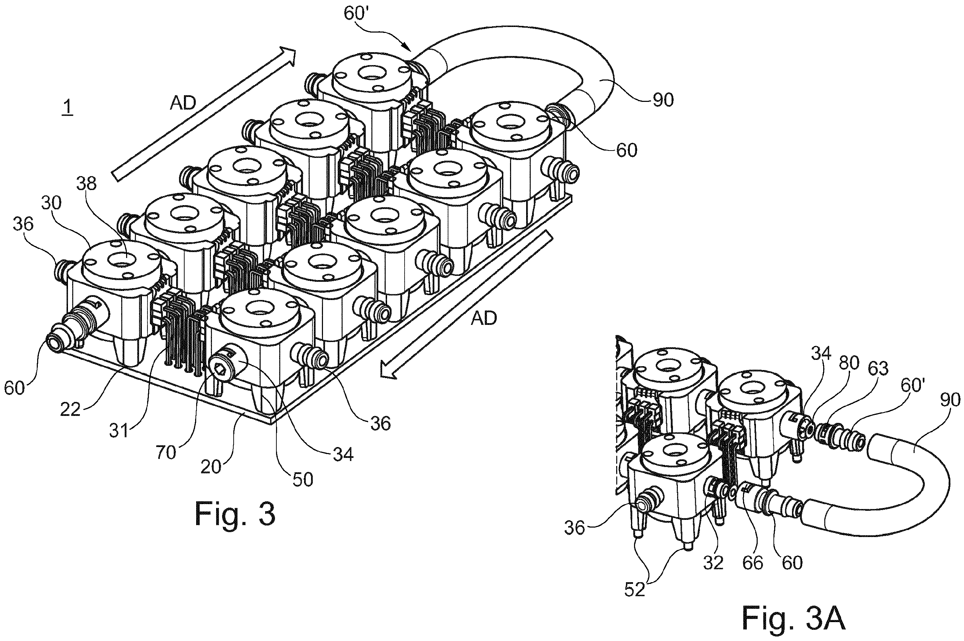

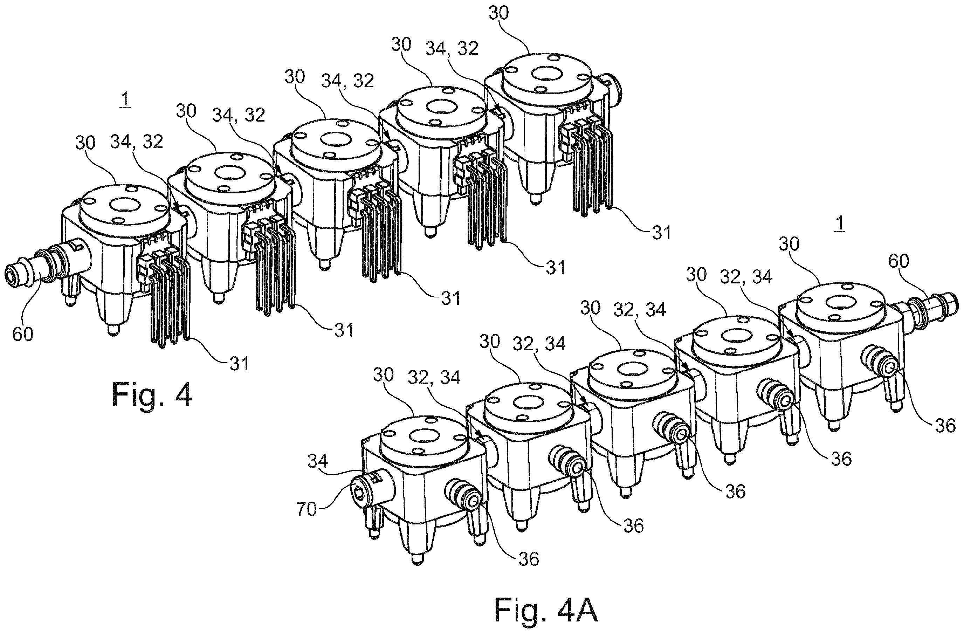

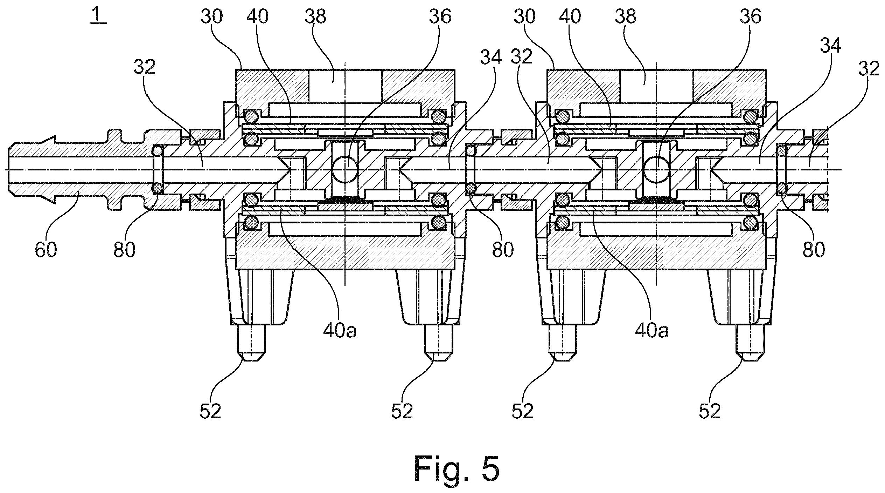

The pneumatic valves 30 are piezo-electrically actuated by piezo actuators. Such piezo actuators can preferably be piezo electric valve membranes 40, 40a as shown in Fig. 5. For the electric actuation, the pneumatic valves 30 comprise electric contacts 31 (as shown in Figs. 4, 4A in greater detail) that are connected to electric lines (not shown) on the printed circuit board 20 (as shown in Fig. 3 in greater detail). The electric contacts 31 are electrically connected to the piezo actuators, preferably by flexible conductor, preferably foil conductors.

The 3/3-way pneumatic valves 30 comprises three states that can be electrically selected (e.g. by way of the piezo electric valve membranes 40, 40a as shown in Fig. 5). Thereby, the piezo electric valve membrane 40, 40a has two piezo electric actuators, one between inlet 32 and seat cushion port 36 and another between seat cushion port 36 and exhaust port 38, 38a. The two piezo electric actuators can be independently electrically actuated to move the piezo electric valve membrane 40 in one or the other direction.
(1) By electric actuation of the pneumatic valve 30 the valve switches to a "closed" state (the state selected in Fig. 2). In this closed state the connection between inlet port 32 and the first seat cushion port 36 of the valve 30 is closed. Further, the connection between first seat cushion port 36 and the exhaust port38, 38a is also closed. Thus, compressed air within the pneumatic seat cushion 104 is retained and the pneumatic connection to the pump 120 is also closed such that no air is released.
(2) By different electric actuation (e.g. different electric polarity), the pneumatic valve 30 switches to an "inflation" state (in Fig. 2 the state at the left to the closed state). In this inflation state the connection between inlet port 32 and the first seat cushion port 36 is open. Further, the connection between first seat cushion port 36 and the exhaust port38, 38a is closed. Thus, compressed air from the air pump 120 can flow to the corresponding pneumatic seat cushion 104 for inflation thereof.
(3) Without electric actuation (e.g. different electric polarity) the pneumatic valve 30 switches to a "deflation" state (in Fig. 2 the state at the right to the closed state). In this deflation state the connection between first seat cushion port 36 and first exhaust port 38 is open to release air out of corresponding pneumatic seat cushion 104 (e.g. to ambient) for deflation thereof. The connection between inlet port 32 and first seat cushion port 36 is closed.

In an alternative embodiment the "deflation" state (3) and the "closed" state (1) can be exchanged. Thus, in such alternative embodiment the pneumatic valve 40 switches to the "closed" state (1) without electric actuation and switches to the "deflation" state (3) by particular electric actuation.

Other types of valves or valve combinations, which provide the same or similar functionality can also be used instead of the shown 3/3-way type valve 30, for example 3/3-way double valves 30a, 3/2-way valves 30b, or 2/2-way valves 30c (as described herein elsewhere in greater detail).

Fig. 3 shows a three-dimensional view of a first embodiment of a vehicle seat cushion inflation system 1. This vehicle seat cushion inflation system 1 comprises an optional housing (not shown), a printed circuit board 20, first set of electrically controlled pneumatic piezoelectric valves 30 and a second set of electrically controlled pneumatic piezoelectric valves 30. It is also possible for the system 1 to merely comprise one set as shown in Figs. 4 and 4A.

The housing surrounds and protects the internal components of system 1. Further it comprises attachment means, like lugs, (not shown) for mounting the system 1 within the vehicle seat 100. The housing further comprises a lid (not shown) that substantially closes the housing.

The printed circuit board 20 may be connected to the interior of the housing. It serves on the one hand for mechanically mounting the valves 30. On the other hand, it serves for the electric actuation of the electrically controlled pneumatic piezoelectric valves 30. The printed circuit board 20 comprises an electrical connector (not shown) for electrically connecting the printed circuit board 20 and vehicle seat cushion inflation system 1 to an electrical board net of a vehicle (not shown).

The sets of electrically controlled pneumatic piezoelectric valves 30 each comprises five valves 30 for the actuation of ten pneumatic seat cushions 104. The pneumatic seat cushions 104 are connected to the seat cushion ports 36 by pneumatic conduits 106 (see Fig. 1). In the shown embodiment the electrically controlled pneumatic piezoelectric valves 30 are 3/3-way piezo valves which comprise piezo elements 40, 40a (see Fig. 5) for switching between the three states explained above. The pneumatic valves 30 are mechanically and electrically connected to the printed circuit board 20. For an electric connection with the printed circuit board 20 the valves 30 comprise electric contacts 31 that are in electric connection with the piezo elements 40, 40a.

The inlet ports 32 and the outlet ports 34 are configured to allow a pneumatic connection of at least two of the vales 30. In this embodiment, the five valves of the first set are pneumatically directly connected in series and arranged in a row (or in an essentially straight line). The inlet ports 32 and the outlet ports 34 are arranged parallel to each other, preferably coaxially (as seen in greater detail in Fig. 5). Further, the seat cushion port 36 is arranged essentially perpendicular to the inlet port 32 and the outlet port 34 of each valve, respectively. Moreover, the seat cushion port 36, the inlet port 32 and the outlet port 34 of each valve are arranged essentially on a same plane (as best seen in Fig. 5).

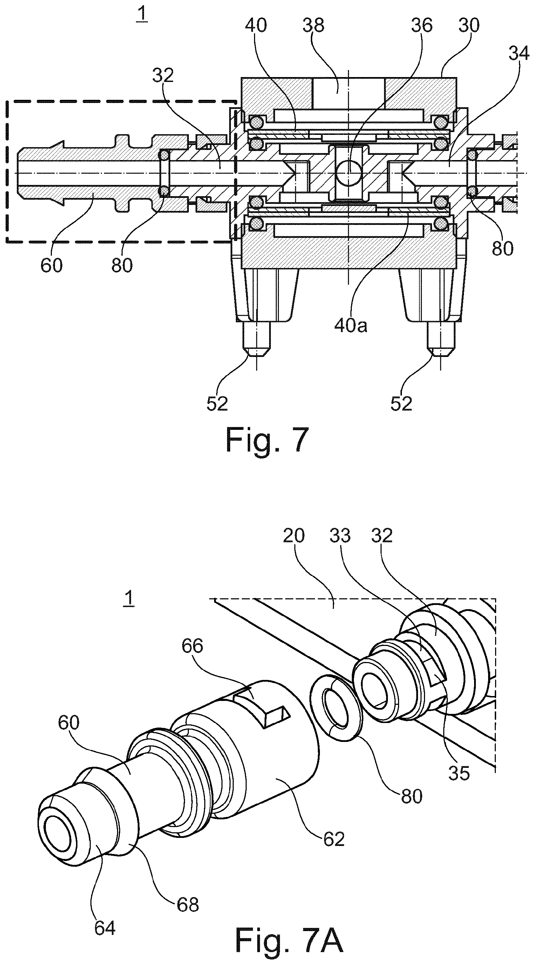

Further, the system comprises two inlet adapters 60, one outlet adapter 60' and one closing cap 70. The inlet adapters 60 have a similar connection part (female type) as an outlet port 34 of a valve 30 and can thus be easily pneumatically connected to an inlet port 32 of a valve 30 (as best seen in Figs. 7 and 7A). The outlet adapter 60' has a similar connection part (male type) as an inlet port 32 of a valve 30 and can thus be easily pneumatically connected to an outlet port 34. The closing cap 70 also has a similar connection part (male type) as an inlet port 32 of a valve 30 and can thus be easily pneumatically connected to an outlet port 34.

In this manner, the first valve 30 of the first set of valves 30 is directly connected to an inlet adapter 60, the last valve 30 of the first set of valves 30 is directly connected to an outlet adapter 60', which is connected to a tube 90, comprised by the system 1**.** The tube 90 is further connected to the inlet adapter 60, which is connected to the inlet port 32 of the first valve 30 of the second set of valves 30. The outlet port 34 of the last valve 30 of the second set of valves 30 is connected with a closing cap 70. The closing cap 70 facilitates a selectively air-tight closure for non-connected valve ports 32, 34. The inlet adapter 60 on the left-hand side of this figure can be connected to a pump 120 (not shown).

As an alternative to the tube 90, it may be possible to provide a plastic injected made part, e.g. by way of injection molding and thereby connecting the outlet port 34 of the last valve 30 of the first set of valves to the first valve 30 of the second set of valves 30 (it is understood, that this is not a "direct connection" and/or that this means "directly connectable" according to the present disclosure).

In this figure, the air flow direction (AD) of air passing through the connected valves is indicated. This is the air flow (AD) from the inlet port 32 to the outlet port 34 of a first valve 30 and from the outlet port 34 of the first valve to an inlet port 32 of a further valve 30 (and repeatedly understood with the following valves). It is understood, that, in case the valves are actuated, the air flow may be guided through the seat cushion ports 36 and/or the exhaust ports 38.

It is appreciated that by means of the corresponding shapes of the inlet ports 32, outlet ports 34, adapters 60, 60' various arrangements of valves 30 can be pneumatically connected to each other. Thereby, no manifold for the vehicle seat cushion inflation system 1 is required, whilst still a modular architecture is provided which is scalable to different numbers of pneumatic seat cushions 104 that need to be provided with air.

In one example, rather than using a closing cap 70, a valve 30 can comprise an integrally formed wall for pneumatically closing a non-connected inlet port 32 or (preferably) a non-connected outlet port. Thereby, no closing cap 70 would be required to block the air of the valve 30. In case such a wall is provided, a pneumatic connection to a further valve 30 may be possible by machining, e.g. drilling, the wall.

Figs. 4 and 4A shows a three-dimensional view of a further preferred embodiment of a vehicle seat cushion inflation system 1 with one set of valves from two different sides. The embodiment is similar to the one of Fig. 3, however, merely one set of valves 30 is given, wherein each valve 30 is connected one by one in a row. The last valve 30 of this set is provided with a closing cap 70 to pneumatically close the outlet port 34 of this valve 30.

Fig. 5 shows partial sectional view of a vehicle seat cushion inflation system 1 with at least two connected valves 30 and an inlet adapter 60. As can be seen, the inlet port 32 and the outlet port 34 of each valve are coaxially with respect to one another. Thereby, the air flow direction (entering from the left in this figure, leaving to the right in this figure, according to a dedicated actuation of the valve) is also essentially coaxially.

The valves 30 further comprise at least one piezo electric valve membrane 40, in particular, two membranes 40, 40a are shown. The membranes 40, 40a can be deformed (in Fig. 5 up and down) by way of an applied electrical field provided by the printed circuit board 20 and the electrical contacts 31 (see Fig. 4). The deformation of the piezo electric valve membrane 40 sets the valves 30 in the desired pneumatic switching state.

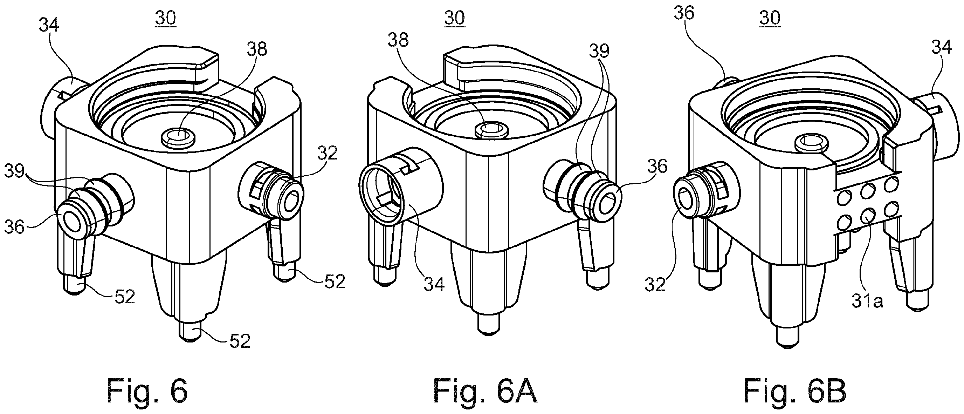

Figs. 6, 6A and 6B show a three-dimensional view of an embodiment of a valve 30 from three different sides.

The valves 30 comprise attachment means 50 for connection of the valves 30 to the printed circuit board 20. For a mechanic connection with the printed circuit board 20 the valves 30 comprise pins 52 that extend through mounting holes 22 (indicated in Fig. 3) in the printed circuit board 20. The pins 52 can be thermally welded from the other side of the printed circuit board 20 to fix the valves 30 thereon.

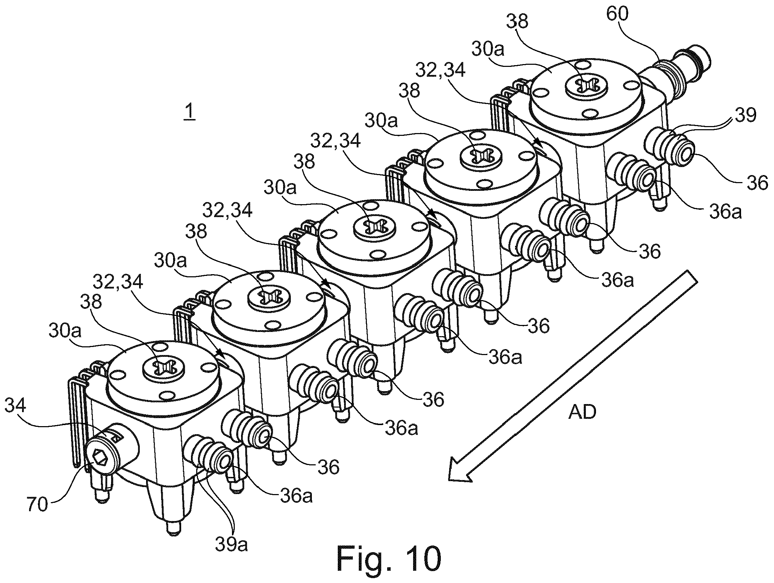

The seat cushion ports 36 (in these figures merely one is shown, Fig. 10 shows two) of the valves 30 allow a connection to the pneumatic seat cushions 104 by a conventional plastic tube as pneumatic conduit 106. Similarly to the inlet adapter 60, for an improved connection to a plastic tube the seat cushion ports 36 comprises latching rims 39.

For an electric connection with the printed circuit board 20 the valves 30 comprise holes 31a for electrical contacts.

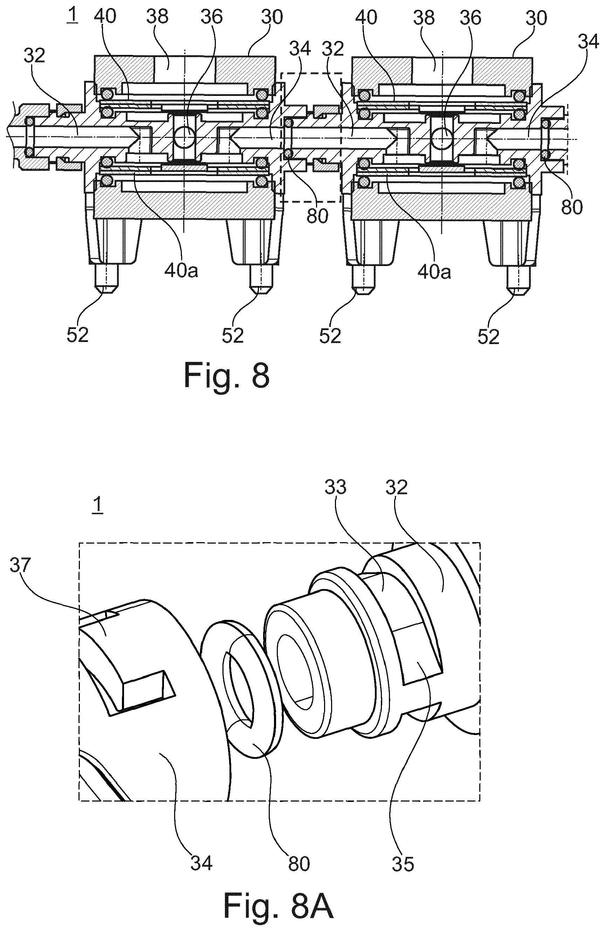

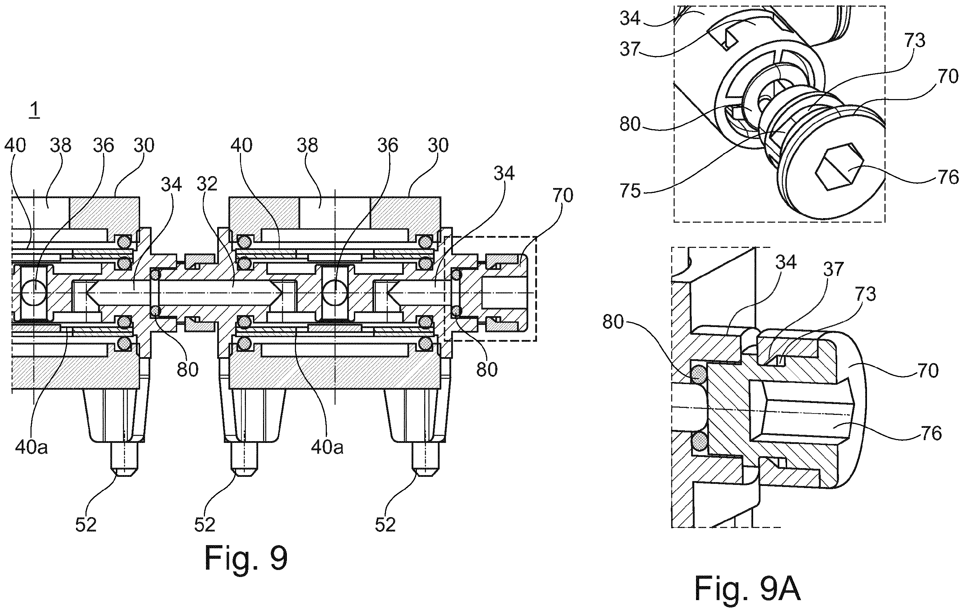

Figs. 7 and 7A show a partial sectional view (Fig. 7) and a three-dimensional detail view (Fig. 7A) of a vehicle seat cushion inflation system 1 during assembly of an inlet adapter 60. The pneumatic connection comprises an O-ring 80 of a rubber like material as sealant between the inlet adapter 60 and the inlet port 32 of the valve 30. Such an O-ring 80 is also used in the pneumatic connection shown in Figs. 8, 8A, 9, 9A. The inlet adapter 60 comprises a preferably female port 62 for connection with an inlet port 32 of a valve 30 and comprises a preferably male port 64 for connection with an air tube to an air supply, like an air pump (not shown). The male port 64 comprises latching rims 68 for an improved connection to a plastic air tube.

Preferably, the inlet port 32 of the valves 30 comprises a notch 33 at the perimeter of the male type port 32 for latching with a latching means 66 of the respective female port of the inlet adapter 60. The notch 33 has a tapered section 35 that interrupts the notch 33 for disengaging with the latching means 66 by rotation, preferably by rotation around 90°. Thereby, the preferably four tapered sections 35 (circumferentially arranged at the perimeter) of the notch 33 push the latching means 66 out of engagement with the notch 33 such that the pneumatic connection between the inlet adapter 60 and the inlet port 32 can be disengaged simply be rotation of the inlet adapter 60 and the inlet port 32 by about 90°.

Figs. 8 and 8A show a partial sectional view and a three-dimensional detail view of a vehicle seat cushion inflation system 1 during assembly of two valves 30. The pneumatic connection between the two valves (the valves are pneumatically connected one by one) comprises an O-ring 80 as described herein.

Preferably, the inlet port 32 of the valve 30 (right hand side of Fig. 8) comprises a notch 33 having the same shape as described herein. Further, preferably, the outlet port 34 of the valve 30 (left hand side of Fig. 8), being a female type port, comprises latching means 37 for latching with the notch 33. The notch 33 has a tapered section 35 that interrupts the notch 33 for disengaging with the latching means 37 by rotation, preferably by rotation around 90° as described herein.

Figs. 9 and 9A show a partial sectional view and a three-dimensional detail view of a vehicle seat cushion inflation system 1 during assembly of closing cap 70.

The closing cap 70 comprises a notch 73 having the same shape as described herein. The notch 73 is configured for latching with the latching means 37 of the outlet port 34 of the valve 30 (right hand side of Fig. 9). Thereby, the closing cap 70 has a tapered section 75 that interrupts the notch 73 for disengaging with the latching means 37 by rotation, preferably by rotation around 90° as described herein. Preferably, the closing cap 70 pneumatically closes a non-connected inlet port 32 and/or a non-connected outlet port 34.

As shown in Fig. 9A in greater detail, the closing cap 70 comprises a hexagon socket 76, for rotating the closing cap by a hexagon socket screw key (e.g. Allen or Inbus key) for disengagement of the connection.

Fig. 10 shows a three-dimensional view of a further preferred embodiment of a vehicle seat cushion inflation system 1 with one set of valves 30a of further types. One set of five valves 30a is shown that are pneumatically connected one by one to form a row. The embodiment is similar to the one of Fig. 4. In this case, 3/2-way piezo double valves 30a are employed. Thus, the valves 30a comprise a first 36 and a second 36a seat cushion port which are individually electrically controllable to pneumatically control two independent seat cushions. Thus, each valve 30a combines two individually controllable 3/2-way piezo electrical valves within one element. Both seat cushion ports 36, 36a are connectable to a respective seat cushion and are arranged substantially parallel to one another (e.g. the second seat cushion port 36a is arranged parallel to the first seat cushion port 36). The valves 30a are operable in two states, namely in the inflation state (guiding air from a pump to the seat cushion ports 36 or 36a) and the deflation state (guiding air from the seat cushion ports 36 or 36a to an exhaust port 38). Each valve 30a may also comprise a second exhaust port 38a, which is arranged opposite to the first exhaust port 38 (the second exhaust port 38a is directed to the bottom in the figure). Each exhaust port 38 or 38a is related to its respective seat cushion port 36 or 36a.

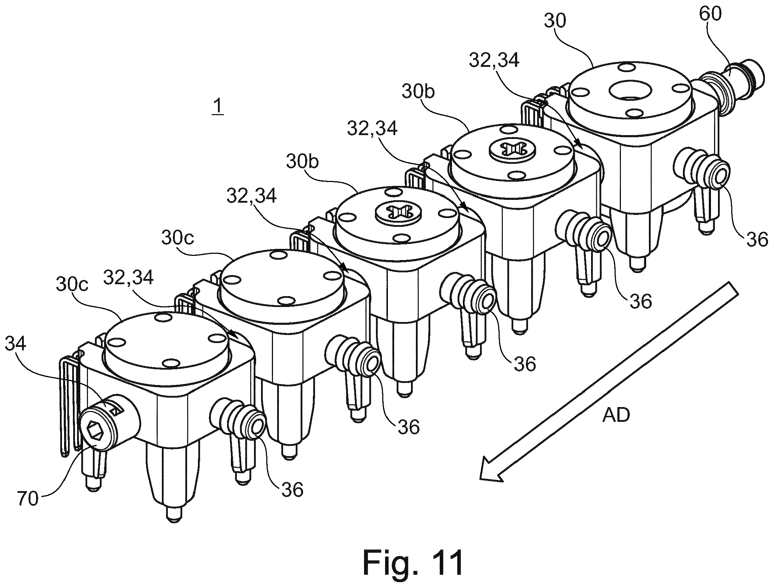

Fig. 11 shows a three-dimensional view of a further preferred embodiment of a vehicle seat cushion inflation system 1 with one set of valves 30, 30b, 30c of several types. This set comprises a combination of one 3/3-way valve 30 (as shown, e.g., in Fig. 3 in greater detail), two 3/2-way (single) valves 30b and two 2/2 (single) valves 30c.

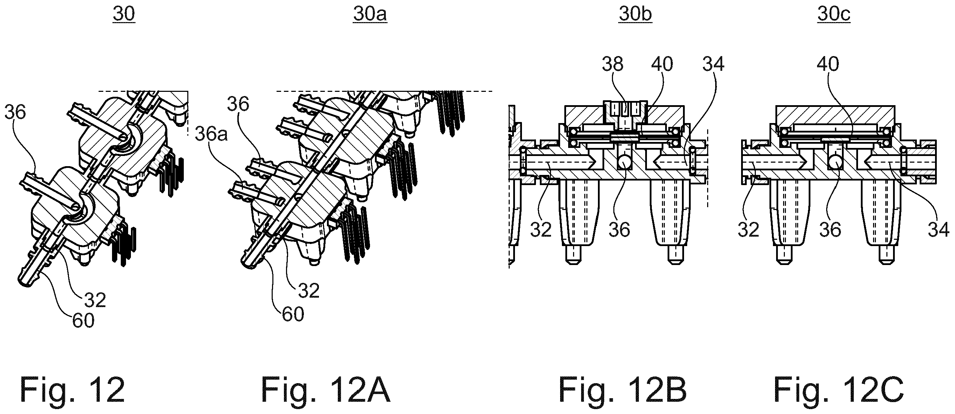

The 3/2-way (single) valves 30b are particularly useful when there is an even number of seat cushions. These valves 30b operate similar to the prescribed 3/2-way double valves 30a of Fig. 10, however, merely one seat cushion port 36 is provided. The 2/2-way (single) valve merely guides air from the inlet port 32 to the outlet port 34 and/or from the inlet port 32 to the seat cushion port 36. There is no exhaust port provided. The valves 30, 30a, 30b and 30c are shown in greater detail in Figs. 12, 12A, 12B and 12C, respectively. It is appreciated that independent of the type of valves 30, 30a, 30b, 30c used herein, a variety of different arrangements of valves can be provided.

Figs. 12 to 12C show valves 30, 30a, 30b, 30c of several types in greater detail according to preferred embodiments of a vehicle seat cushion inflation system. Valves 30 and 30a comprise two individually controllable piezo electric valve membranes 40, 40a (not shown in Figs. 12 and 12A). Thereby, in valve 30, the states of inflating, deflating and holding can be individually controlled. In valve 30a inflating and deflating by way of the two seat cushion ports 36, 36a and the two exhaust ports 38, 38a (not shown in Fig. 12A) can be individually controlled. Valves 30b and 30c comprise one controllable piezo electric valve membranes 40. Thereby, in valve 30b, inflating and deflating by way of the seat cushion port 36 and the exhaust port 38 can be controlled. In valve 30c, merely the seat cushion port 36 is controlled, e.g. valve 30c does not comprise an exhaust port. It is appreciated that in all valves a direct connection between the inlet port 32 and the outlet port 34 is facilitated to allow air flow from the inlet port 32 to the outlet port 34. The direct connection between the inlet port 32 and the outlet port 34 is always present and cannot be interrupted or controlled by the valves 30.

The distinctive design of the valves 30 and in particular their inlet ports 32 and outlet ports 34 provides a scalable system that easily allows for using different numbers of pneumatic valves 30 within the vehicle seat cushion inflation system 1 to serve a plurality of seat cushions 104. The system 1 can be particularly easy assembled by a method which comprises at least the following steps in the following order:
a. attaching, electrically controlled pneumatic piezoelectric valves of a set of electrically controlled pneumatic piezoelectric valves directly in series to provide a valves subassembly; and
b. attaching, the valves subassembly to a printed circuit board, to provide a valves and printed circuit board subassembly.

It is noted that the above examples may be combined with further aspects as described herein and details of the examples may also be omitted, as will be understood by the skilled person. The scope of protection is determined by the claims and is not limited by the embodiments disclosed in the above figures.

### List of reference signs:

- 1: vehicle seat cushion inflation system
- 20: printed circuit board
- 22: mounting holes
- 30: valve (3/3 single)
- 30a: valve (3/2 double)
- 30b: valve (3/2 single)
- 30c: valve (2/2 single)
- 31: electrical contacts
- 31a: holes for electrical contacts
- 32: inlet port
- 33: notch of a port
- 34: outlet port
- 35: tapered section
- 37: latching means of a port
- 36: first seat cushion port
- 36a: second seat cushion port
- 38: first exhaust port
- 38a: second exhaust port
- 39: latching rim
- 40: piezo electric valve membrane
- 40a: piezo electric valve membrane
- 50: attachment means
- 52: pins
- 60: inlet adapter
- 60': outlet adapter
- 62: female port
- 63: notch of an adapter
- 64: male port
- 66: latching means of an adapter
- 68: latching rim
- 70: closing cap
- 73: notch of a closing cap
- 75: tapered section
- 76: hexagon socket
- 80: O-rings
- 90: tube
- 100: vehicle seat
- 104: pneumatic seat cushion
- 106: pneumatic conduits
- 108: backrest
- 110: seat portion
- 112: headrest
- 120: air pump
- AD: air flow direction between valves

## Claims

1. Vehicle seat cushion inflation system (1) for selectively inflating a set of pneumatic seat cushions (104) within a vehicle seat (100), comprising:
a. a printed circuit board (20);
b. at least one set of electrically controlled pneumatic piezoelectric valves (30, 30a, 30b, 30c), connected to the printed circuit board (20), wherein each valve (30) has an inlet port (32), an outlet port (34) and a first seat cushion port (36) connectable to at least one of the seat cushions (104); wherein
c. the inlet port (32) and outlet port (34) of each individual valve (30, 30a, 30b, 30c) are in direct pneumatic connection with each other; and
d. the inlet port (32) of one valve (30) and the outlet port (34) of another valve (30) are directly connected to each other to provide a direct pneumatic connection between the two vales (30).

2. Vehicle seat cushion inflation system (1) according to the preceding claim,
wherein
the inlet port (32) is of a male type and the outlet port (34) is of a corresponding female type; or
the inlet port (32) is of a female type and the outlet port (34) is of a corresponding male type.

3. Vehicle seat cushion inflation system (1) according to one of the preceding claims, wherein
the outlet port (34) of a valve (30) comprises at least one latching means (37) for latching with the inlet port (32) of a further valve (30) or with an outlet adapter (60'); or
the inlet port (32) of a valve (30) comprises at least one latching means (37) for latching with the outlet port (34) of a further valve (30).

4. Vehicle seat cushion inflation system (1) according to one of the preceding claims, wherein
the inlet port (32) of a valve (30), the outlet port (34) of a valve (30), an outlet adapter (60') and/or a closing cap (70) comprise a notch (33, 63, 73) at the perimeter for latching with a latching means (37, 66) of a port (32, 34) and/or of an inlet adapter (60), wherein the notch (33, 63, 73) has a tapered section (35, 65, 75) that interrupts the notch (33, 63, 73) for disengaging with the latching means (37, 66) by rotation.

5. Vehicle seat cushion inflation system (1) according to one of the preceding claims, wherein the set of electrically controlled pneumatic valves (30) comprises three or more, preferably four, five, six, seven or eight valves (30).

6. Vehicle seat cushion inflation system (1) according to one of the preceding claims, wherein the valves (30) are pneumatically connected in series and arranged in a row.

7. Vehicle seat cushion inflation system (1) according to one of the preceding claims, wherein inlet ports (32) and the outlet ports (34) are arranged parallel, preferably coaxially.

8. Vehicle seat cushion inflation system (1) according to one of the preceding claims, wherein the first seat cushion port (36) is arranged essentially perpendicular to the inlet port (32) and/or the outlet port (34),
preferably, wherein the first seat cushion port (36), the inlet port (32) and the outlet port (34) are arranged essentially on a same plane.

9. Vehicle seat cushion inflation system (1) according to one of the preceding claims, wherein the valves (30) comprise integrally injection molded attachment means (50) for connection of the valves (30) to the printed circuit board (20),
preferably, wherein the attachment means (50) has pins (52), which extend through mounting holes (22) within the printed circuit board (20).

10. Vehicle seat cushion inflation system (1) according to one of the preceding claims, further comprising at least one closing cap (70) for pneumatically closing a non-connected inlet port (32) and/or a non-connected outlet port (34).

11. Vehicle seat cushion inflation system (1) according to one of the preceding claims, further comprising O-rings (80), for sealing the pneumatic connection(s) between valves (30) and/or a pneumatic connection between a port (32, 34) and a closing cap (70) and/or a connection between a port (32, 34) and an adapter (60, 60').

12. Vehicle seat cushion inflation system (1) according to one of the preceding claims, wherein at least one of the valves (30) further has at least one exhaust port (38, 38a) wherein the exhaust port (38, 38a) is arranged perpendicular to the inlet port (32), the outlet port (34) and the first seat cushion port (36).

13. Vehicle seat cushion inflation system (1) according to one of the preceding claims, wherein at least one of the valves (30) is configured as a double valve (30a) and further comprises an individually electrically controllable second seat cushion port (36a) connectable to a seat cushion.

14. Vehicle seat cushion inflation system (1) according to one of the preceding claims, wherein the valves (30) further comprise at least one piezoelectric valve membrane (40, 40a).

15. Method for assembling a vehicle seat cushion inflation system (1), the method comprising at least the following steps in the following order:
a. attaching, electrically controlled piezoelectric pneumatic valves (30, 30a, 30b, 30c) of a set of electrically controlled piezoelectric pneumatic valves (30, 30a, 30b, 30c) directly in series to provide a valves subassembly (30); and
b. attaching, the valves subassembly (30) to a printed circuit board (20), to provide a valves and printed circuit board subassembly (20, 30).
